# EUROPEAN PATENT APPLICATION

(11) **EP 1 432 092 A1**
(43) Date of publication of application: **23.06.2004**
(21) Application number: 02425774.3
(22) Date of filing: 16.12.2002
(51) Int. Cl.: H02G 3/08

(54) **Box for electrical cables**

(71) Applicant: Kastom S.r.l., 24040 Pagazzano (BG) (IT)
(72) Inventor: Dossena, Daniela Virginia, 24043 Caravaggio (BG) (IT)
(74) Representative: Trupiano, Federica

(57) **Abstract**

A terminal (1) for electrical cables of the type provided with a casing (2) comprises at least one housing (6) for the cables and at least one first threaded seat (7), within which there can engage a first threaded retention element (4) for withholding cables. The said terminal (1) comprises a second threaded seat (8), within which there can engage a second threaded element (12) for coupling the terminal (1) to a further terminal (101).

## Description

The present invention relates to a terminal for electrical cables of the type comprising a casing provided with a housing for insertion of the cables and a seat designed for receiving a threaded element, such as a screw, for withholding the cables.

Here and in the what follows, by the term "electrical cable" is meant any cable capable of conducting electricity, such as for example a cable of the electric wiring system of a building, a telephone cable, or any other type of conducting cable.

Known to the art is the technique of making terminals for electrical cables, in which, in an appropriate casing, the electrically conductive ends of a number of electrical cables are inserted jointly in at least one housing of the terminal and withheld therein by the foot of a screw, which, inserted in a threaded seat communicating with the housing of the cables, has the function of compressing the ends of the cables against a wall of the housing in order to prevent said ends of the cables from coming out of the terminal.

The housing of the cables may, for example, be of a through type, i.e., one in which the cables can be inserted from both of the end sections of the housing, or of the blind type, with a single section for insertion of the cables, and may comprise a conductive ring for guaranteeing electrical continuity between the cables themselves in the terminal.

During use of the said terminals with screw tightening, there may easily arise the situation where it becomes expedient to add electrical cables to the ones already present within the housing of the terminal, and it is therefore necessary to unscrew the retention element, extract the cables already inserted in the terminal, add to them the new cables, re-insert the complete bundle of cables in the housing and then re-tighten the threaded retention element.

The said operations are laborious to carry out, above all when the terminals are inserted in a connector block of small size, require that the cables should not be supplied by electric current and that the housing for the cables of the terminal originally envisaged should be of such a size as to be able to receive also the additional cables.

In particular, in the case where the number of cables is higher than the capacity of the terminal originally envisaged, it is therefore necessary to proceed to the replacement of the terminal present with a new terminal having a housing for cables of larger size, or having a greater number of housings, this entailing the need for removal of the pre-existing terminal and the location, usually within the connector block, of the new terminal.

When the connector block, inside which the new terminal, in the case where this is present, is to be set, comprises a disorderly multiplicity of cables and of terminals, the operation of replacement of the terminal proves to be of considerable difficulty.

Furthermore, the absence of electric current in the cables to be displaced is a necessary condition for being able to add, or even eliminate, cables in a terminal in order to prevent serious consequences for the operator who is obliged to handle the exposed ends of the electrical cables in the terminals of the known art mentioned above.

In some cases, for example to reduce the overall dimensions, it is likewise necessary to couple together mechanically a plurality of terminals, which constitute a set of terminals, the cables of which are not necessarily electrically connected together.

In this connection, there have been proposed, for example in the U.S. patent US 3.771.104, in the name of Clark, terminals provided, on opposite sides with respect to the housing of the cables, with a groove and corresponding dove-tailed projection, which enable mechanical coupling between terminals, so that the latter can form a chain. The possible electrical coupling between terminals of the said chain is, however, entrusted to an overhead connecting cable, which extends externally from a first terminal to a next terminal of the chain, thus rendering it necessary to unscrew the threaded retention element and possibly modify the original arrangement of the cables in the terminal in order to add new cables.

Also in the solution proposed by the Clark patent, even though this is aimed at a terminal in which the insertion of completely covered cables is envisaged, it is, however, desirable to interrupt the electrical supply of the cables when it is intended to add or eliminate any of the cables.

A purpose of the present invention is to provide a terminal for electrical cables that will enable mechanical and possibly electrical coupling to another terminal which does not present the drawbacks of the prior art.

A further purpose of the present invention is to provide a terminal for electrical cables which will not require the operator to handle the exposed ends of the cables already present in the case where it is necessary to add cables to a pre-existing terminal.

A further purpose of the present invention is to provide a terminal that can be mechanically and electrically coupled to a pre-existing terminal in a simple and fast way.

Yet a further purpose of the present invention is to provide a method for reciprocal coupling of two or more terminals which is convenient and reliable.

The above and other purposes are achieved by the terminal according to the first independent claim and by the subsequent dependent claims, by the arrangement of terminals according to Claims 13 to 15, and by the method for coupling together two or more terminals according to Claim 16 and Claim 17.

The terminal for electrical cables according to the present invention is of the type provided with a casing comprising at least one housing for the cables and at least one first threaded seat, within which there can be engaged a first threaded retention element for withholding cables. The said terminal comprises a second threaded seat, within which there can be engaged a second threaded element for coupling the terminal with a further terminal.

The presence of a second threaded seat, within which a threaded coupling element can be screwed, such as a grub screw or some other screw, which is in turn screwed within a corresponding seat of a further terminal, enables convenient coupling of a number of terminals.

Electrical continuity between terminals may be ensured when, according to a preferred aspect of the present invention, the aforesaid threaded coupling element is electrically conductive and the threaded seats of the two terminals to be coupled, within which the said threaded element is engaged, enable electrical connection of the threaded element with the cables present in each of the terminals.

Advantageously, the housing for the cables may extend according to a longitudinal axis, and the first and second threaded seats may be coaxial and extend according to an axis transverse to the axis of the housing.

According to a further aspect of the present invention, the second seat is provided with a removable protective lid, and the first seat may comprise a substantially tubular protective shell, which is also removable.

There follows a description, provided purely by way of non-limiting example, of a preferred embodiment of a terminal according to the present invention with the aid of the attached figures, in which:
- Figures 1a and 1b are axonometric views from two different sides of one and the same terminal according to one aspect of the present invention;
- Figure 2 is a cross-sectional view of the terminal illustrated in Figures 1a and 1b;
- Figure 3 is a cross-sectional view of two terminals coupled together, of the type illustrated in Figure 2; and
- Figure 4 is an axonometric view of an arrangement of terminals according to the present invention.

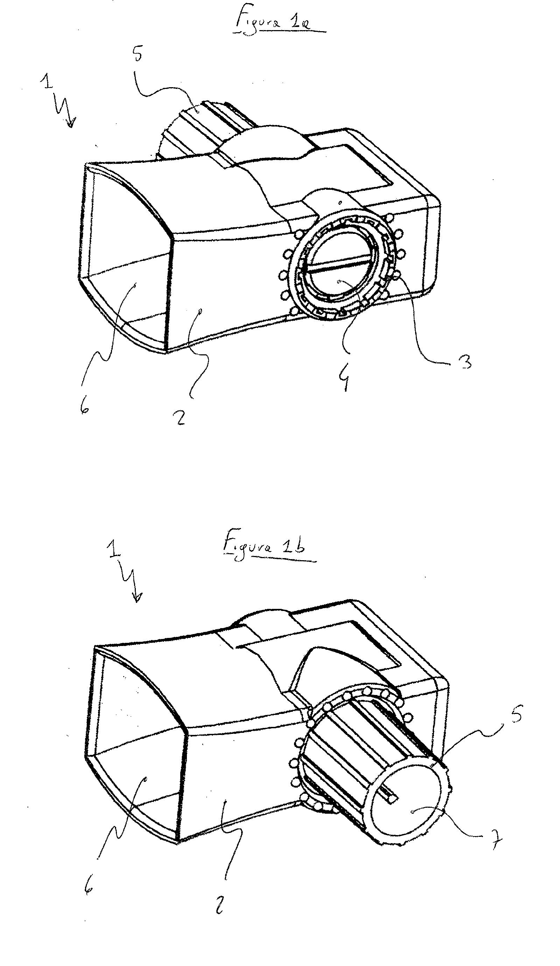

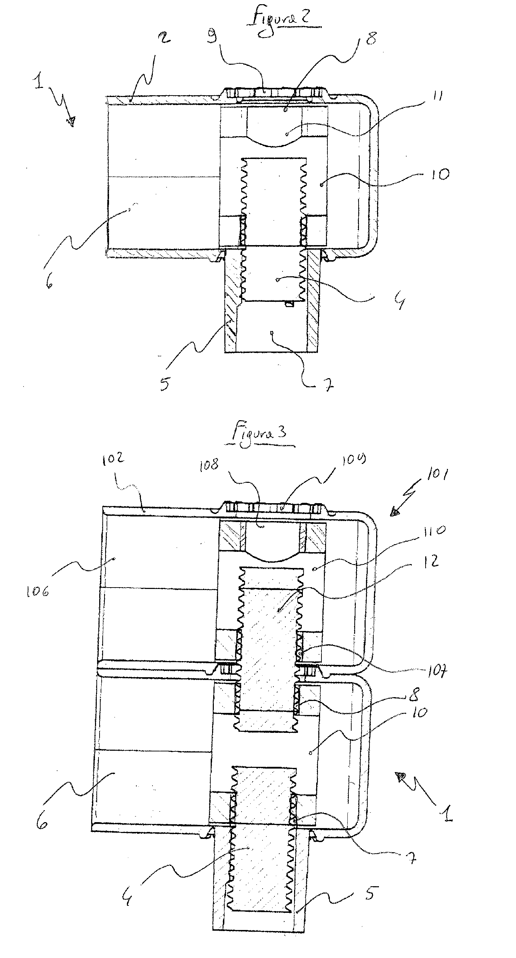

With reference to Figures 1a, 1b and 2, the terminal 1 for electrical cables according to the present invention comprises an outer casing 2 made of electrically insulating material, within which there is present a housing 6, in which the electrical cables are inserted, for example the cables of the electric wiring system or the telephone-wiring system of a building, and a first threaded seat 7, in which a threaded retention element 4 is engaged for withholding the cables, such as for example a grub screw or some other screw.

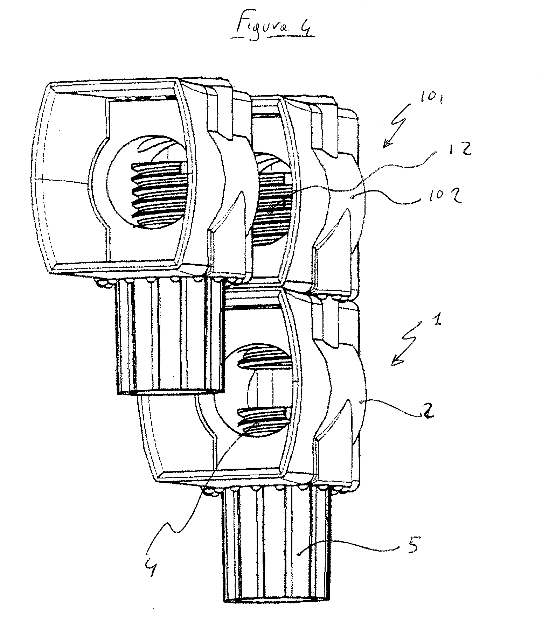

The terminal 1 according to the present invention further comprises a second threaded seat 8, within which it is possible to insert a further threaded element (designated by the reference number 12 in Figure 3), which has the purpose, as will be seen in greater detail in what follows, of providing the mechanical or possibly electrical coupling with another terminal.

Making of a coupling between consecutive terminals by means of a threaded element is simple to implement and guarantees a high stability for the chain of terminals thus created.

In the terminal illustrated in Figures 1a, 1b and 2, according to a possible embodiment of the terminal 1, the housing 6 extends longitudinally and is of the blind type, i.e., one in which the cables are inserted from a single opening section of the terminal 1, and the threaded seat 7 develops along an axis transverse to the axis of the housing 6 in such a way that the cables are kept in their position within the same terminal 1 by the threaded element 4 by compression between the foot of the same threaded element 4 and the side wall opposite to the seat 7 of the casing 2.

The housing 6, according to a peculiar aspect of the present invention, has inside it a ring 10 designed to engage with the cables inserted in the terminal 1. The conductive ring 10 may be made of electrically conductive material and may be provided with threaded holes 11, which constitute extensions of the threaded seats 7 and 8. Set within the conductive ring 10 are the exposed ends of the electrical cables, which are withheld, by compression, inside the same conductive ring 10 by the threaded element 4, as schematically illustrated in Figure 2.

The presence of holes 11 in the conductive ring 10 enables the threaded elements, respectively 4 and 12, to enter physically into contact with the exposed ends of the cables set inside the conductive ring 10 and thus provide, in the case of electrically conductive threaded elements, an electrical coupling between the cables and the said threaded elements 4, 12.

The first threaded seat 7, within which the threaded retention element 4 for withholding the cables is screwed, may have a shell 5 for protecting the screw which projects from the casing 2, the said shell possibly being made of electrically insulating material. The shell 5 may be made of a single piece with the casing 2 or else be made as a separate removable part for facilitating mechanical coupling of two consecutive terminals.

The second threaded seat 8, according to a particularly advantageous aspect of the present invention, is coaxial to the first seat 7 and is set on the side opposite to the first seat 7 with respect to the longitudinal axis of the housing 6. The second threaded seat 8 may be provided with a protective lid 9, which is removable to enable insertion or removal of the threaded coupling element 12 (see Figure 3). The removable protective lid 9, which has the function of preventing an operator from coming into contact with conductive parts of the terminal when the second threaded seat 8 is not in use, may comprise a raised notch which enables use of a tool with a flat tip, for example a screwdriver, for removing the said lid 9.

The casing 2, the shell 5, and the lid 9 are usually made of electrically insulating material for preventing the operator from coming into contact with the live cables.

Alternative geometrical configurations of the housing 6, of the seats 7 and 8 (for example arranged according to axes that are skew or parallel to one another), of the shell 5 and of the lid 9, as well as conformations of the terminal 1 different from the one illustrated even so fall within the sphere of protection of the present invention, provided that there is envisaged the presence of a second threaded seat 8 designed for receiving a threaded coupling element 12 with a further terminal.

Each or both of the threaded retention element 4 and coupling element 12 (Figure 3) may be electrically insulating, in the case where there is required just mechanical coupling of two terminals, or electrically conductive, in the case where there is required also an electrical coupling between the cables present in two or more terminals coupled together. In this latter case, as will be seen, the threaded seats 7 and 8 must enable electrical connection, either direct or indirect, with the cables present inside the housing 6, and the threaded coupling element 12 may be a metal grub screw.

Advantageously, the threaded seats 7 and 8 of the terminal 1 may have, at their outer end edge, means for engagement 3, consisting, for example, of contrast elements and concavities, which have the function of favouring mechanical coupling of the joined threaded seats of two terminals coupled together by means of the threaded element 12.

With reference now also to Figures 3 and 4, the coupling of two or more terminals 1, 101 of the type described above, takes place according to the following steps:
- screwing, into the first threaded seat 107 of a first terminal 101, a threaded element 12, designed for withholding the cables set in the housing 106 of the said first terminal 101 in such a way that a portion of the said threaded element 12 will project out of the said terminal 101;
- screwing the projecting portion of the threaded element 12, for example a grub screw, within the second threaded seat 8 of a next terminal 1; and
- possibly screwing a threaded element 4 in the first seat 7 of the next terminal 1 for withholding within the housing 6 the cables inserted in the latter.

The presence of two threaded seats 7 and 8 in the terminal 1 according to the invention, as may be seen in Figure 3, enables both coupling of the terminal 1 to the terminal 101, thanks to the threaded element 12, which engages simultaneously in the second threaded seat 8 of the terminal 1 and in the first threaded seat 107 of the terminal 101, and the simple insertion of the threaded retention element 4 for withholding the cables in the terminal 1. The threaded element 12 then acts both as a threaded retention element for withholding the cables in the terminal 101 and as a threaded coupling element of the terminal 1 in regard to the terminal 101.

Should there just be required mechanical coupling of two terminals 1, 101, of the type illustrated in the figures, the threaded elements 4 and 12 may be made of electrically insulating material, and the threaded seats 7, 8, 107, 108 of the two terminals to be coupled 1, 101 need not necessarily enable a physical or electrical connection between the threaded elements and the cables that are withheld.

In this latter case, with particular reference to the embodiments of the terminals illustrated in the figures, after the electrical cables provided within the housing 106 have been inserted and after the ends of the cables without insulating sheaths have reached the ring 110, which is preferably conductive, the operator inserts and screws the threaded element 12 within the first threaded seat 107 of the terminal 101 until the said threaded element 12 withholds the cables in position within the ring 110.

Consequently, in the case where the terminal 101 is provided with a removable protective shell 5, the operator removes the shell 5 in such a way that a portion of the said threaded element 12 will project laterally from the terminal 101 and will thus be available for being inserted into a corresponding threaded seat 8 of a next terminal 1.

For mechanical coupling of the next terminal 1, the operator removes the protective lid 9, which obstructs access to the threaded seat 8 of said terminal 101, and screws the projecting portion of the threaded element 12 within said seat 8, or vice versa.

Next, the operator will be able to insert further electrical cables into the housing 6 of the terminal 1 and withhold them within the ring 10 provided in the said housing 6 thanks to the use of a further threaded element 4 inserted in a threaded seat 7 of the terminal 1.

By repeating the procedure described above, it is thus possible to obtain a chain of a multiplicity of terminals 1, 101 mechanically connected together by means of threaded elements.

In the case where there is, instead, required also an electrical coupling between the terminals 1, 101, it is sufficient for the threaded coupling element 12 to be electrically conductive and for at least the threaded seats 8 and 107 of the terminals 1, 101 connected by the element 12 to enable electrical connection of the said element 12 with the cables inserted in the terminals 1, 101 in order to achieve the required effect.

In fact, the simultaneous electrical connection of the cables present within the ring 110 of the terminal 101 with the cables present in the ring 10 of the terminal 1 is obtained thanks to the contact of the threaded element 12 with the exposed ends of the cables in both of the terminals, so as to guarantee electrical continuity of the two terminals 1, 101 themselves.

Consequently, in the case where it is necessary to add new cables to a terminal 101 according to the present invention, it will not be necessary to unscrew the element 12, insert the new cables, after prior removal of the pre-existing ones, and then screw again the element 12, with the consequent difficulty of execution and need for the operator to touch the pre-existing cables. Instead, with the terminal 101 according to the present invention, it will be sufficient to couple, according to what has been described above, a further terminal 1 to the terminal 101 and then to insert the new cables into the additional terminal 1.

Consequently, in the case where the operator intends to add a new terminal 1 to the terminal 101 already in use or a chain of terminals according to the present invention, he does not need to touch the electrical cables already inserted in the pre-existing terminal, which is usually live, or in the chain of terminals, in so far as it will be sufficient to connect the additional terminal 1, screwing the second seat 8 of the terminal 1 onto the projecting portion of the threaded element 12, thus touching only electrically insulated parts, such as the casings 2, 102 of the two terminals 1, 101, respectively.

The coaxial arrangement of the threaded seats 7, 8 and 107, 108 of the terminals 1 and 101, together with the fact that their axis is transverse to the longitudinal axis of the respective housings 6, 106 for the cables, enables an operator to screw the threaded element 12 easily, gaining access to the head or foot of the said threaded element 12 in the case where the head and foot both have a groove for engagement of a screwdriver, for example from the seat 7 of the next terminal 1, when the two terminals 1, 101 are already coupled together and the element 12 is already inserted in the seat 107 of the first terminal 101.

The presence of concavities and corresponding contrast elements 3 on the outer end edges of the matching threaded seats 8 and 107 of the two joined terminals 1, 101 respectively, perform the function of lead-in and of mechanical butting engagement for the two terminals, which is able to facilitate further the operation of coupling said terminals together.

## Claims

1. A terminal (1) for electrical cables of the type provided with a casing (2) comprising at least one housing (6) for the cables and at least one first threaded seat (7), within which there can engage a first threaded retention element (4) for withholding the cables, the said terminal (1) being **characterized in that** it comprises a second threaded seat (8), within which there can engage a second threaded element (12) for coupling of said terminal (1) with a further terminal (101).

2. The terminal according to Claim 1, **characterized in that** said second threaded element (12) is electrically conductive and said second seat (8) enables the electrical coupling of said second threaded element with the cables set in said housing (6).

3. The terminal according to Claim 1 or Claim 2, **characterized in that** said first threaded retention element (4) is electrically conductive and said first seat (7) enables electrical coupling of said first threaded retention element for withholding the cables set in said housing (6).

4. The terminal according to any one of the preceding claims, in which said housing (6) extends along a longitudinal axis, said first threaded seat (7) extends along an axis that is substantially transverse to said housing, and said second seat (8) is coaxial with said first seat (7).

5. The terminal according to any one of the preceding claims, in which said housing (6) comprises an electrically conductive ring (10) for contact the cables, which has at least one through hole for passage of the threaded retention element (4).

6. The terminal according to Claim 5, in which said first seat (7) and said second seat (8) each have a hole (11) in said electrically conductive ring (10) for the electrical coupling of the respective threaded elements (4, 12) with the cables.

7. The terminal according to any one of the preceding claims, **characterized in that** said first seat (7) and/or said second seat (8) comprise a substantially tubular protective shell (5) for protection of the respective threaded element constrained in a removable way to said casing (2).

8. The terminal according to any one of the preceding claims, **characterized in that** the edge of the outer end section of said second seat (8) and/or of said first seat (7) comprises a removable protective lid (9).

9. The terminal according to any one of the preceding claims, **characterized in that** it comprises means of reciprocal engagement (3) with a further terminal.

10. The terminal according to Claim 10, in which said means of reciprocal engagement comprise concavities and/or contrast elements (3), made at the edge of the outer end section of said first seat (7), designed for coupling mechanically with corresponding contrast elements and/or concavities provided on the edge of the outer end section of the second seat (108) of a further terminal (101).

11. The terminal according to any one of the preceding claims, in which said first threaded element (4) and/or said second threaded element (12) are metal grub screws.

12. The terminal according to any one of the preceding claims, **characterized in that** said casing (2) and/or said shell (5) and/or said lid (9) are made of electrically insulating material.

13. A chain of terminals for electrical cables of the type comprising at least two terminals (1, 101) according to any one of the preceding claims, **characterized in that** said at least two terminals are mechanically coupled together thanks to a threaded element (12), which engages, respectively, in said first threaded seat (107) of one (101) of the terminals (1, 101) and in said second threaded seat (8) of the next terminal (1).

14. The chain according to Claim 13, in which said threaded element (12) is electrically conductive and said first seat (107) of the first terminal (101) and said second seat (8) of the next terminal (1) enable electrical connection of said threaded element (12) with the cables set, respectively, in said first terminal (101) and in said next terminal (1).

15. The chain according to either Claim 13 or Claim 14, in which said first seat (107) of said first terminal (101) and said second seat (8) of said next terminal (1) comprise means of reciprocal engagement (3).

16. A method for coupling together two or more terminals for electrical cables according to any one of Claims 1 to 12, comprising the steps of:
a. screwing, into the first threaded seat (107) of a first terminal (101), a threaded element (12) so that a portion of said threaded element will project outwards from the casing (102) of the first terminal (101) from said first seat (107); and
b. coupling a next terminal (1) by screwing the projecting portion of the said threaded element (12) into said second threaded seat (8) of the next terminal (1).

17. The method according to Claim 16, in which the threaded element (12) is electrically conductive and said first seat (107) of the first terminal (101) and said second seat (8) of the subsequent terminal (1) enable electrical coupling of the threaded element (12) with the cables contained in the respective housings (106, 6), the said method comprising the steps of:
a. setting electrically in contact said threaded element (12) with the cables contained in the housing (106) of said first terminal (101); and
b. setting electrically in contact said threaded element (12) with the cables contained in the housing (6) of said next terminal (1).
